# EUROPEAN PATENT APPLICATION

(11) **EP 4 848 467 A1**
(43) Date of publication of application: **02.12.2026**
(21) Application number: 25744930.6
(22) Date of filing: 17.01.2025
(51) Int. Cl.: H01M 50/593, H01M 10/0566, H01M 10/0587, H01M 50/35, H01M 50/107, H01M 50/152, H01M 50/586, H01M 50/627, H01M 50/655

(54) **CYLINDRICAL BATTERY**

(30) Priority: 25.01.2024 JP 2024009389
(71) Applicant: PANASONIC INTELLECTUAL PROPERTY MANAGEMENT CO., LTD., Kadoma-shi, Osaka 571-0057 (JP)
(72) Inventor: SUZUKI, Kana, kadoma-shi, Osaka 571-0057 (JP); YAMASHITA, Shuichi, kadoma-shi, Osaka 571-0057 (JP)
(74) Representative: Eisenführ Speiser
(86) International application number: PCT/JP2025/001235
(87) International publication number: WO 2025/159001

(57) **Abstract**

This cylindrical battery is characterized by comprising: an electrode body in which a positive electrode and a negative electrode are wound via a separator; a non-aqueous electrolyte; a bottomed cylindrical exterior can that accommodates the electrode body and the non-aqueous electrolyte; a sealing body that closes the opening of the exterior can; and an insulating plate (30) that is disposed between the electrode body and the sealing body and has a through-hole (32). The cylindrical battery is further characterized in that the surface of the insulating plate (30) on the electrode body side is provided with a protrusion (33) extending toward the electrode body along the edge of the through-hole (32) in a region facing the electrode body.

## Description

### TECHNICAL FIELD

The present disclosure relates to a cylindrical battery.

### BACKGROUND ART

There has been known a cylindrical battery, comprising a wound electrode assembly, a non-aqueous electrolyte solution, a bottomed cylindrical housing can that houses the electrode assembly and the non-aqueous electrolyte solution, a sealing assembly that seals an opening portion of the housing can, and an insulating plate arranged between the electrode assembly and the sealing assembly. The insulating plate provides electrical insulation between the electrode assembly and the sealing assembly to restrain occurrence of an internal short circuit. Patent Literature 1 discloses a cylindrical battery comprising an insulating plate including a plurality of through-holes.

In general, in the manufacturing process of cylindrical batteries, an insulating plate is arranged above an electrode assembly after the electrode assembly is housed in the housing can. A non-aqueous electrolyte solution is then injected into the housing can with the insulating plate arranged above the electrode assembly. In this case, the non-aqueous electrolyte solution is housed in the housing can through a through-hole provided in the insulating plate.

### CITATION LIST

### PATENT LITERATURE

PATENT LITERATURE 1: Japanese Unexamined Patent Application Publication No. 2004-111105

### SUMMARY

When a non-aqueous electrolyte solution is injected into a housing can with an insulating plate arranged above an electrode assembly, it may take time for the non-aqueous electrolyte solution to pass through the through-hole provided in the insulating plate. From the perspective of implementing cylindrical batteries with high productivity, it is expected to shorten the time to inject the non-aqueous electrolyte solution.

A cylindrical battery as one aspect of the present disclosure comprises: an electrode assembly having a positive electrode and a negative electrode wound with a separator interposed between the positive electrode and the negative electrode, a non-aqueous electrolyte solution, a bottomed cylindrical housing can that houses the electrode assembly and the non-aqueous electrolyte solution, a sealing assembly that seals an opening portion of the housing can; and an insulating plate arranged between the electrode assembly and the sealing assembly, the insulating plate having at least one of a through-hole and a notch, in which in a region facing the electrode assembly on a surface of the insulating plate on a side of the electrode assembly, a protrusion extending to the side of the electrode assembly is provided along at least one of the through-hole and the notch.

According to the cylindrical battery as one aspect of the present disclosure, the time to inject the non-aqueous electrolyte solution may be shortened.

### BRIEF DESCRIPTION OF DRAWING

FIG. 1 is an axial sectional view of a cylindrical battery as one example of an embodiment.
FIG. 2 is a perspective view of an upper insulating plate, constituting the cylindrical battery as the example of the embodiment, as viewed from the side of an electrode assembly.
FIG. 3 is a plan view of the upper insulating plate, constituting the cylindrical battery as the example of the embodiment, as viewed from the side of the electrode assembly.
FIG. 4 is a sectional view along an A-A line in FIG. 3.
FIG. 5 is a plan view of the upper insulating plate, constituting the cylindrical battery as another example of the embodiment, as viewed from the side of the electrode assembly.
FIG. 6 is a plan view of the upper insulating plate, constituting the cylindrical battery as another example of the embodiment, as viewed from the side of a sealing assembly.
FIG. 7 is a sectional view along a B-B line in FIG. 6.

### DESCRIPTION OF EMBODIMENTS

Hereinafter, examples of the embodiment of a cylindrical battery according to the present disclosure will be described in detail with reference to the drawings. In the following description, specific shapes, materials, numerical values, directions, or the like are examples for easy understanding of the present invention, and can appropriately be changed in accordance with the specifications of the cylindrical battery. In addition, when a plurality of embodiments or modifications are included in the following description, it is assumed from the beginning that their characteristic portions are combined and used as appropriate.

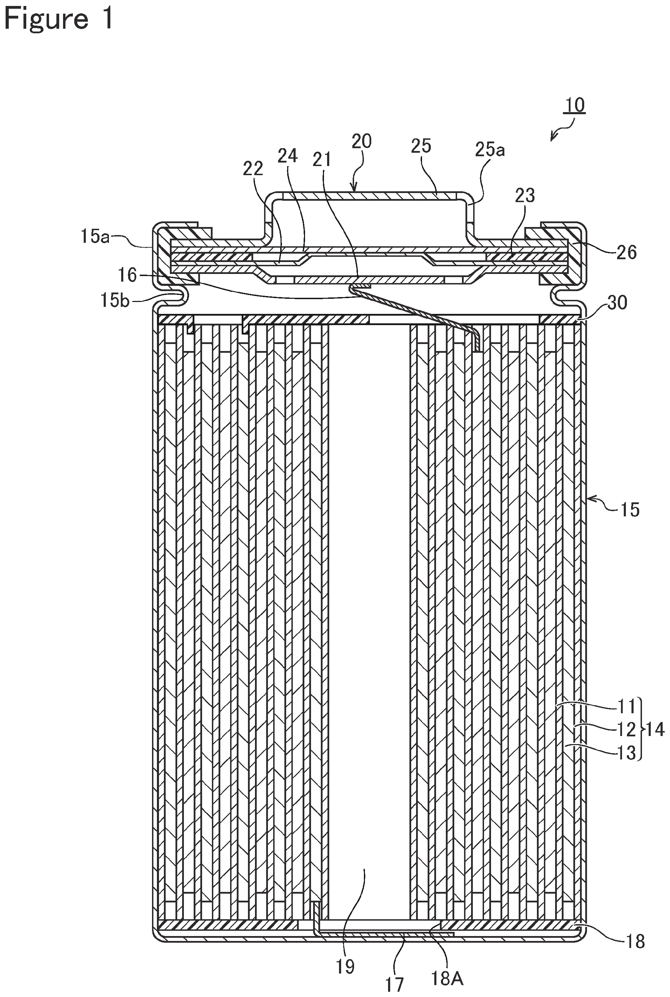

FIG. 1 is an axial sectional view of a cylindrical battery 10 as one example of the embodiment. The cylindrical battery 10 shown in FIG. 1 comprises an electrode assembly 14, a non-aqueous electrolyte solution (not shown), and a bottomed cylindrical housing can 15 that houses the electrode assembly 14 and the non-aqueous electrolyte solution. The cylindrical battery 10 further comprises a sealing assembly 20 that seals an opening portion 15a of the housing can 15, and an upper insulating plate 30 as an insulating plate arranged between the electrode assembly 14 and the sealing assembly 20. Hereinafter, for the convenience of explanation, the side of the sealing assembly 20 is defined as "upper side", and a bottom side of the housing can 15 is defined as "lower side".

A positive electrode 11, a negative electrode 12, and a separator 13, which constitute the electrode assembly 14, are all strip-shaped long members wound in a spiral shape so as to be stacked alternately in a radial direction of the electrode assembly 14. A hollow portion 19 is formed in a wound core of the electrode assembly 14. The separator 13 is formed with dimensions slightly larger than the positive electrode 11 and the negative electrode 12. Specifically, the separator 13 is formed to be longer in a longitudinal direction and a width direction than the positive electrode 11 and the negative electrode 12. The electrode assembly 14 includes a positive electrode lead 16 connected to the positive electrode 11 by welding or other processes, and a negative electrode lead 17 connected to the negative electrode 12 by welding or other processes.

The positive electrode 11 includes a strip-shaped positive electrode current collector and a positive electrode mixture layer formed on both the surfaces of the positive electrode current collector. For the positive electrode current collector, there may be used, for example, a metal foil such as aluminum, or a film with the metal arranged on the surface thereof.

The positive electrode mixture layer is fabricated by, for example, applying a positive electrode mixture slurry containing a positive electrode active material, a conductive agent, a binding agent, and a solvent such as N-Methyl-2-pyrrolidone (NMP) to both the surfaces of the positive electrode current collector, and then drying and compressing it. Examples of the positive electrode active material may include lithium-transition metal composite oxides containing transition metal elements, such as Co, Mn, or Ni. Examples of the conductive agent may include carbon materials such as carbon black (CB), acetylene black (AB), Ketjenblack, and graphite. Examples of the binding agent may include fluororesin such as polytetrafluoroethylene (PTFE) and polyvinylidene difluoride (PVDF), polyacrylonitrile (PAN), polyimide (PI), acrylic resin, and polyolefin resin.

The negative electrode 12 includes a strip-shaped negative electrode current collector and a negative electrode mixture layer formed on both the surfaces of the negative electrode current collector. For the negative electrode current collector, there may be used, for example, a metal foil such as copper, or a film with the metal arranged on the surface thereof.

The negative electrode mixture layer is fabricated by, for example, applying a negative electrode mixture slurry containing a negative electrode active material, a binding agent, water, and the like to both the surfaces of the negative electrode current collector, and then drying and compressing it. Examples of the negative electrode active material may include carbon materials such as natural graphite and artificial graphite, metals that alloy with lithium, such as Si and Sn, or alloys containing these, and oxides thereof. Examples of the binding agent may include styrene-butadiene rubber (SBR), CMC or its salt, polyacrylic acid or its salt, and polyvinyl alcohol.

For the separator 13, a porous sheet with ion permeability and insulation properties is used. Specific examples of the porous sheet may include microporous thin films, woven fabrics, and non-woven fabrics. As the material of the separator 13, olefin resin such as polyethylene and polypropylene is preferable.

As a non-aqueous solvent (organic solvent) for the non-aqueous electrolyte solution housed in the housing can 15, there may be used carbonates, lactones, ethers, ketones, esters, or the like, and two or more of these solvents may be mixed and used. When two or more of these solvents are mixed and used, a mixed solvent containing a cyclic carbonate and a chain carbonate is preferably used. For example, as the cyclic carbonate, there may be used an ethylene carbonate (EC), a propylene carbonate (PC), a butylene carbonate (BC), and the like, and as the chain carbonate, there may be used a dimethyl carbonate (DMC), an ethyl methyl carbonate (EMC), and a diethyl carbonate (DEC), and the like. As the electrolyte salt of the non-aqueous electrolyte solution, for example, LiPF₆, LiBF₄, LiCF₃SO₃, and mixtures of these may be used. The amount of electrolyte salt dissolved in the non-aqueous solvent may be, for example, greater than or equal to 0.5 mol/L and less than or equal to 2.0 mol/L.

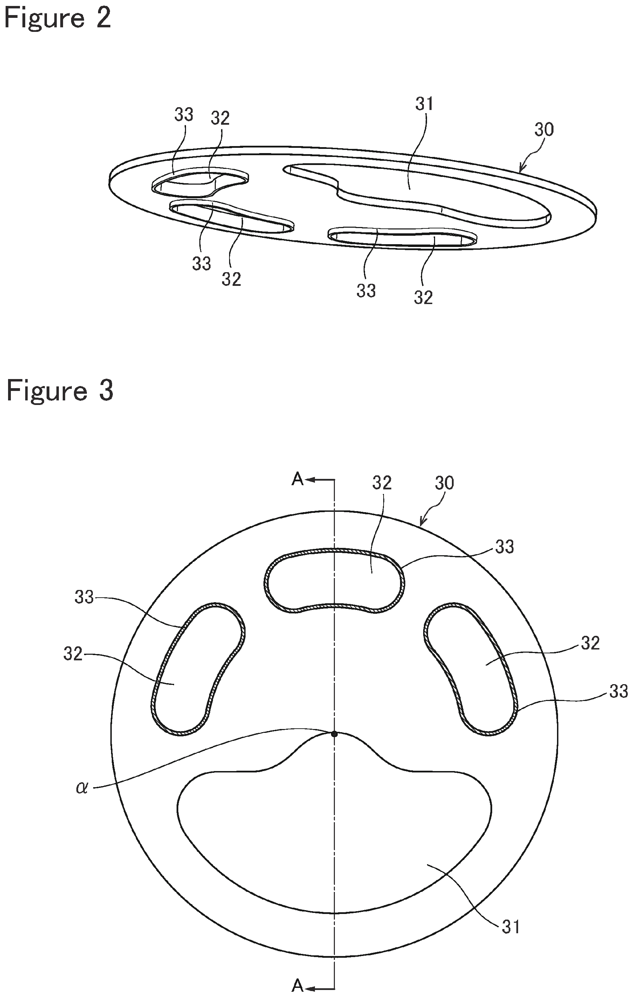

An upper insulating plate 30 and a lower insulating plate 18 are provided above and below the electrode assembly 14, respectively. The positive electrode lead 16 extends upward through a later-described first through-hole 31 (see FIG. 3) of the upper insulating plate 30 and is welded to the lower surface of a filter 21, which is a bottom plate of the sealing assembly 20. As a result, in the cylindrical battery 10, a cap 25, which is a top plate of the sealing assembly 20 that is electrically connected with the filter 21, serves as a positive electrode terminal. The negative electrode lead 17 also extends toward the bottom of the housing can 15 through a through-hole 18A provided in a central portion of the lower insulating plate 18 and is welded to the inner surface of the bottom of the housing can 15. As a result, in the cylindrical battery 10, the housing can 15 serves as a negative electrode terminal.

The housing can 15 has a bottomed cylindrical shape made of metal with a grooved portion 15b on the side of the opening portion 15a. The grooved portion 15b supports the sealing assembly 20 with its upper surface. Below the grooved portion 15b, the housing can 15 houses the electrode assembly 14 and the non-aqueous electrolyte solution. The grooved portion 15b is preferably present in an annular shape along the circumferential direction of the housing can 15. The grooved portion 15b can be formed, for example, by pressing a side surface portion of the housing can 15 from the outside.

The sealing assembly 20 includes the filter 21, a lower vent member 22, an insulating member 23, an upper vent member 24, and the cap 25 stacked in this order from the side of the electrode assembly 14. The inside of the cylindrical battery 10 is closed by sealing the opening portion 15a of the housing can 15 with the sealing assembly 20. Between the housing can 15 and the sealing assembly 20, a gasket 26 is provided to ensure the hermeticity of the inside of the battery and the insulation between the housing can 15 and the sealing assembly 20.

Each member constituting the sealing assembly 20 has, for example, a disc shape or a ring shape, and each member except the insulating member 23 is electrically connected to each other. The lower vent member 22 and the upper vent member 24 are connected to each other at their respective central portions with the insulating member 23 interposed between their respective circumferential edge portions. When the internal pressure of the battery rises due to abnormal heat generation or other causes, the lower vent member 22 breaks, for example, and this causes the upper vent member 24 to swell toward the cap 25 and be separated from the lower vent member 22, so that their electrical connection is cut off. As the internal pressure rises further, the upper vent member 24 breaks, so that gas is exhausted through a vent hole 25a of the cap 25.

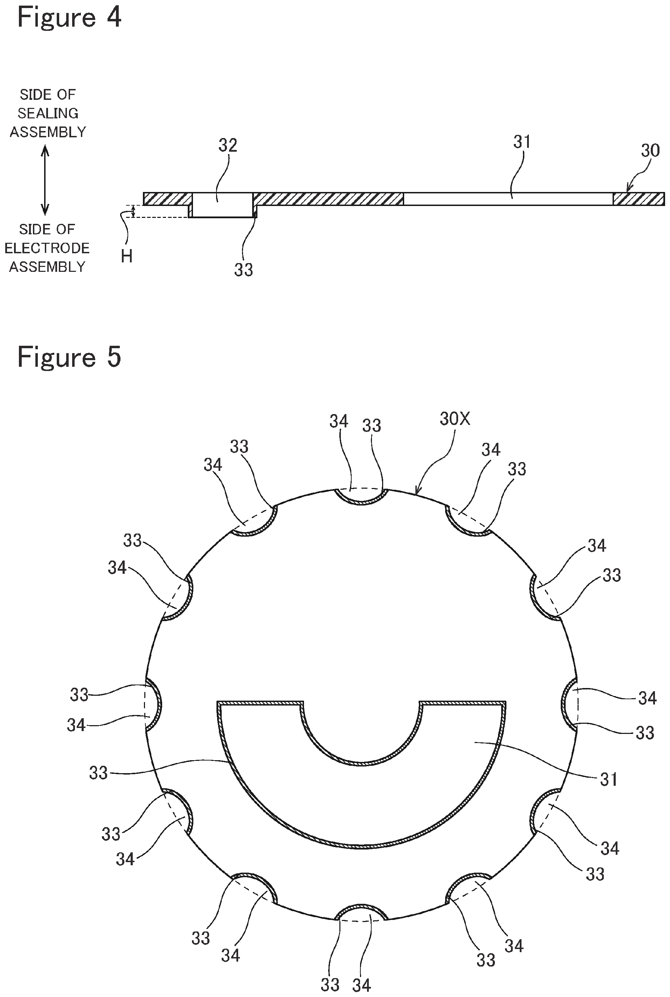

Next, the upper insulating plate 30 will be described in detail with further reference to FIGS. 2 to 4. FIG. 2 is a perspective view of the upper insulating plate 30 as viewed from the side of the electrode assembly 14 (lower side), FIG. 3 is a plan view of the upper insulating plate 30 as viewed from the side of the electrode assembly 14, and FIG. 4 is a sectional view along an A-A line in FIG. 3. Here, in FIG. 3, regions where later-described protrusions 33 are provided are hatched and illustrated for the convenience of explanation.

As shown in FIGS. 1 to 3, the upper insulating plate 30, which has a circular shape in planar view, is arranged between the electrode assembly 14 and the sealing assembly 20. In the present embodiment, the upper insulating plate 30 is arranged so as to face the electrode assembly 14, except for a region facing the hollow portion 19 on the center side of the electrode assembly 14. The upper insulating plate 30 provides electrical insulation between the electrode assembly 14 and the sealing assembly 20. The upper insulating plate 30 also restrains displacement of the electrode assembly 14 when an impact or the like is applied to the cylindrical battery 10. The upper insulating plate 30 is constituted of, for example, polyolefin resin, epoxy resin, polyimide resin, or phenolic resin.

As shown in FIGS. 2 and 3, the upper insulating plate 30 has the first through-hole 31 that allows the positive electrode lead 16 to pass through, and three second through-holes 32 that are smaller than the first through-hole 31 and that do not allow the positive electrode lead 16 to pass through. At the time of injecting the non-aqueous electrolyte solution during the manufacturing process of the battery, the non-aqueous electrolyte solution is housed in the housing can 15 through the first through-hole 31 and the second through-holes 32. In other words, the first through-hole 31 and the second through-holes 32 serve as injection ports of the non-aqueous electrolyte solution. In addition, when gas is generated inside the battery during abnormal heat generation of the electrode assembly 14 or other events, the gas is exhausted toward the sealing assembly 20 through the first through-hole 31 and the second through-holes 32. In other words, the first through-hole 31 and the second through-holes 32 serve as exhaust ports of the gas.

The first through-hole 31, which has a substantially semicircular shape, is provided in one half portion of the upper insulating plate 30 (lower half in FIG. 3). The first through-hole 31 has a shape protruding toward a center α of the upper insulating plate 30 in the vicinity of the center α. Here, the shape of the first through-hole 31 is not particularly limited as long as the positive electrode lead 16 can pass through.

A ratio of the opening area of the first through-hole 31 to the area of a circumscribed circle of the upper insulating plate 30 is, for example, greater than or equal to 10% and less than or equal to 40%, and may be greater than or equal to 15% and less than or equal to 35%. When the ratio of the opening area of the first through-hole 31 to the area of the circumscribed circle of the upper insulating plate 30 is set to greater than or equal to 10% and less than or equal to 40%, it becomes easier to pass the positive electrode lead 16 while providing electrical insulation between the electrode assembly 14 and the sealing assembly 20.

The second through-holes 32, which have a substantially oblong shape, are provided in an arc pattern around the center α of the upper insulating plate 30. The second through-holes 32 do not allow the positive electrode lead 16 to pass through as described above. In the present embodiment, the three second through-holes 32 each have an identical shape. Without being limited thereto, the second through-holes 32 may have a substantially circular shape, for example. The number of the second through-holes 32 may be two or less, and may be four or more.

A ratio of the sum of the opening areas of the second through-holes 32 to the area of the circumscribed circle of the upper insulating plate 30 is, for example, less than or equal to 30%, and preferably less than or equal to 25%. When the ratio of the sum of the opening areas of the second through-holes 32 to the area of the circumscribed circle of the upper insulating plate 30 is set to less than or equal to 30%, it becomes easier to provide electrical insulation between the electrode assembly 14 and the sealing assembly 20. A lower limit of the ratio of the sum of the opening areas of the second through-holes 32 to the area of the circumscribed circle of the upper insulating plate 30 is 5%, for example.

In the region facing the electrode assembly 14 on the lower surface of the upper insulating plate 30, protrusions 33 extending to the side of the electrode assembly 14 (lower side) are provided along the second through-holes 32. The protrusions 33 are in contact with, for example, the upper surface of the separator 13 constituting the electrode assembly 14, or the side surface of the separator 13 on the upper end side thereof.

As described above, the second through-holes 32 are smaller than the first through-hole 31. As a result, when a non-aqueous electrolyte solution is injected into the housing can 15, it may take time for the non-aqueous electrolyte solution to pass through the second through-holes 32. Accordingly, the protrusions 33 are provided along the edges of the second through-holes 32, so that the non-aqueous electrolyte solution that has entered the second through-holes 32 moves downward along the protrusions 33, comes into contact with the separator 13, and penetrates into the electrode assembly 14. This makes it possible to restrain the non-aqueous electrolyte solution from remaining in the second through-holes 32 and thereby shorten the time to inject the non-aqueous electrolyte solution. In addition, the protrusions 33 coming into contact with the separator 13 can restrain the displacement of the upper insulating plate 30 above the electrode assembly 14.

The protrusions 33 are preferably provided in the range of greater than or equal to 50% of the entire circumferences of the edges of the adjacent second through-holes 32, and more preferably provided in the range of greater than or equal to 75% of the entire circumferences of the edges of the adjacent second through-holes 32. When the protrusions 33 are provided in the range of greater than or equal to 50% of the entire circumferences of the edges of the adjacent second through-holes 32, the non-aqueous electrolyte solution that has entered the second through-holes 32 can move downward more easily, so that the time to inject the non-aqueous electrolyte solution can be further shortened. Here, the protrusions 33 may be provided over the entire circumferences of the edges of the adjacent second through-holes 32. This makes it possible to further shorten the time to inject the non-aqueous electrolyte solution. In the present embodiment, the protrusions 33 are provided over the entire circumferences of all the second through-holes 32.

As shown in FIG. 4, a length (H) of the protrusion 33 in the axial direction (up-down direction) of the housing can 15 is preferably greater than or equal to 0.10 mm, and more preferably greater than or equal to 0.15 mm. By setting the length of protrusions 33 to greater than or equal to 0.10 mm, the region of the protrusion 33 in contact with the separator 13 can be increased. As a result, it becomes possible to restrain the non-aqueous electrolyte solution from remaining in the second through-holes 32 and further shorten the time to inject the non-aqueous electrolyte solution. An upper limit of the length of the protrusions 33 is, for example, 1.0 mm. By setting the length of the protrusions 33 to less than or equal to 1.0 mm, the protrusions 33 are restrained from coming into contact with the positive electrode 11 or the negative electrode 12 that constitutes the electrode assembly 14. As a result, damage to the positive electrode 11 and the negative electrode 12 caused by the protrusions 33 is restrained. Therefore, the length of the protrusions 33 is preferably greater than or equal to 0.10 mm and less than or equal to 1.0 mm, and more preferably greater than or equal to 0.15 mm and less than or equal to 1.0 mm.

The protrusions 33 may extend along the directions inclined to the axial direction (up-down direction) of the housing can 15, though the protrusions 33 preferably extend along the axial direction of the housing can 15. With such a configuration, the non-aqueous electrolyte solution that has entered the second through-holes 32 can easily move downward along the protrusions 33, so that the time to inject the non-aqueous electrolyte solution can be further shortened.

The thickness of the upper insulating plate 30 is, for example, greater than or equal to 0.10 mm and less than or equal to 1.0 mm, and may be greater than or equal to 0.10 mm and less than or equal to 0.50 mm, except for the regions where the protrusions 33 are provided. A suitable example of the thickness of the upper insulating plate 30 is 0.30 mm.

In the above embodiment, the protrusions 33 are provided only in the second through-holes 32, though the protrusion 33 may also be provided in the first through-hole 31 in addition to the second through-holes 32. Moreover, the number of the first through-holes 31 is not limited to one, and may be two or more.

A modification of the upper insulating plate 30 will be described next with reference to FIG. 5. FIG. 5 is a plan view of an upper insulating plate 30X as a modification, as viewed from the side of the electrode assembly 14. Here, in FIG. 5, the regions where the protrusions 33 are provided are hatched and illustrated for the convenience of explanation.

As shown in FIG. 5, the upper insulating plate 30X has a plurality of notches 34 extending radially inward on an outer circumferential edge of the upper insulating plate 30X. The upper insulating plate 30X also has only the first through-hole 31 and has no second through-holes 32 (see FIG. 3).

In the example shown in FIG. 5, the first through-hole 31, which has a semicircular arc shape, is provided in one half portion of the upper insulating plate 30X (lower half in FIG. 5). Here, the shape of the first through-hole 31 is not limited thereto, and may have a shape similar to the upper insulating plate 30 shown in FIG. 3, for example.

The notches 34, which have a substantially semicircular shape, are provided over the entire circumference of the upper insulating plate 30X at intervals. In the present embodiment, the notches 34 are provided at substantially equiangular intervals in the circumferential direction. When a non-aqueous electrolyte solution is injected in the manufacturing process of the battery, the non-aqueous electrolyte solution is housed in the housing can 15 through the notches 34. In other words, the notches 34 serve as injection ports of the non-aqueous electrolyte solution.

A ratio of the sum of the opening areas of the notches 34 to the area of the circumscribed circle of the upper insulating plate 30X is, for example, less than or equal to 30%, and preferably less than or equal to 25%. When the ratio of the sum of the opening areas of the notches 34 to the area of the circumscribed circle of the upper insulating plate 30X is set to less than or equal to 30%, it becomes easier to provide electrical insulation between the electrode assembly 14 and the sealing assembly 20. A lower limit of the ratio of the sum of the opening areas of the notches 34 to the area of an outer shape of the lower surface of the upper insulating plate 30X is 5%, for example.

In the region facing the electrode assembly 14 on the lower surface of the upper insulating plate 30X, protrusions 33 extending to the side of the electrode assembly 14 (lower side) are provided along the edges of the notches 34. In the example shown in FIG. 5, a protrusion 33 is also provided along the edge of the first through-hole 31 in addition to the notches 34. The protrusions 33 are provided along the edges of the notches 34 and the first through-hole 31, so that the non-aqueous electrolyte solution that has entered the notches 34 or the first through-hole 31 moves downward along the protrusions 33, comes into contact with the separator 13, and penetrates into the electrode assembly 14. This makes it possible to restrain the non-aqueous electrolyte solution from remaining in the notches 34 or the first through-hole 31 and thereby shorten the time to inject the non-aqueous electrolyte solution.

In the example shown in FIG. 5, the second through-holes 32 are not provided in the upper insulating plate 30X. However, in addition to the first through-hole 31 and the notches 34, the second through-holes 32 may also be provided. In the example shown in FIG. 5, the protrusions 33 are provided along the edges of all the notches 34. However, some of the notches 34 may be without the protrusions 33.

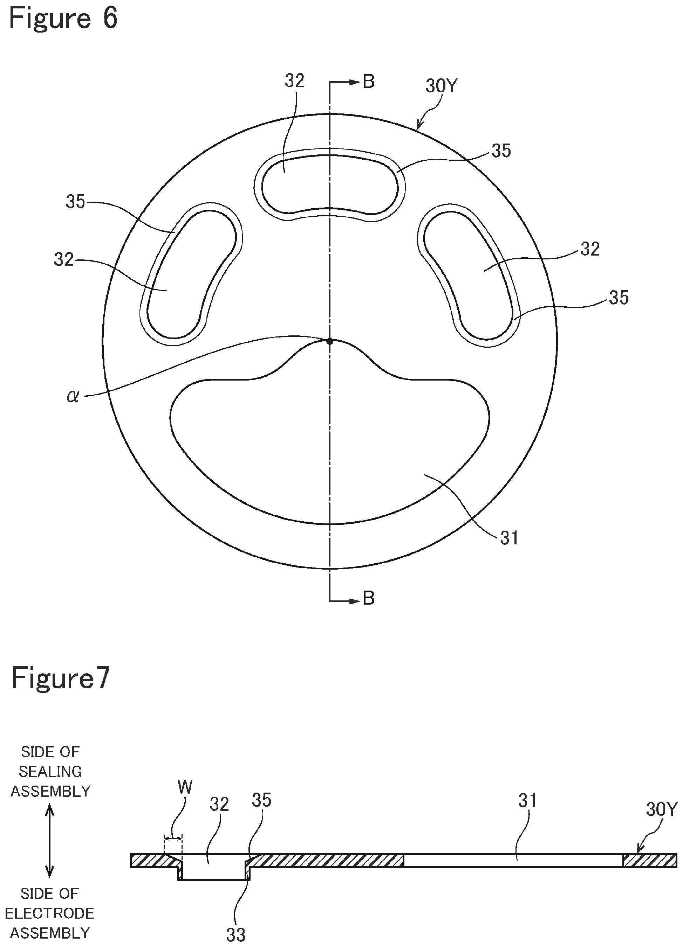

Next, another modification of the upper insulating plate 30 will be further described with reference to FIGS. 6 and 7. FIG. 6 is a plan view of an upper insulating plate 30Y as a modification, as viewed from the side of the sealing assembly 20 (upper side), and FIG. 7 is a sectional view along a B-B line in FIG. 6.

As shown in FIG. 6, the upper insulating plate 30Y has one first through-hole 31 and three second through-holes 32. In addition, the first through-hole 31 and the second through-holes 32 of the upper insulating plate 30Y are similar in shape and arrangement to the upper insulating plate 30 shown in Fig 3. The protrusions 33 are also provided over the entire circumferences of all the second through-holes 32.

Meanwhile, as shown in FIGS. 6 and 7, on the surface (upper surface) of the upper insulating plate 30Y on the side of the sealing assembly 20, inclined regions 35 inclined to the side of the electrode assembly 14 (lower side) toward the edges of the second through-holes 32 are provided along the edges of the second through-holes 32. By providing the inclined regions 35 on the upper surface of the upper insulating plate 30Y, it is easier for the non-aqueous electrolyte solution present in the vicinity of the second through-holes 32 to enter the second through-holes 32 along the inclined regions 35 at the time of injecting the non-aqueous electrolyte solution into the housing can 15. As a result, the time to inject the non-aqueous electrolyte solution can be further shortened.

The inclined regions 35 are preferably provided in the range of greater than or equal to 50% of the entire circumferences of the edges of the adjacent second through-holes 32, and more preferably provided in the range of greater than or equal to 75% of the entire circumferences of the edges of the second through-holes 32. When the inclined regions 35 are provided in the range of greater than or equal to 50% of the entire circumferences of the edges of the adjacent second through-holes 32, the non-aqueous electrolyte solution more easily enter the second through-holes 32, so that the time to inject the non-aqueous electrolyte solution can be further shortened. Here, the inclined regions 35 may be provided over the entire circumferences of the edges of the adjacent second through-holes 32. This makes it possible to further shorten the time to inject the non-aqueous electrolyte solution. In the present embodiment, the inclined regions 35 are provided over the entire circumferences of all the second through-holes 32.

As shown in FIG. 7, a width (W) of the inclined regions 35 is preferably greater than or equal to 0.10 mm, and more preferably greater than or equal to 0.20 mm. By setting the width of the inclined regions 35 to greater than or equal to 0.10 mm, the non-aqueous electrolyte solution more easily enters the second through-holes 32, so that the time to inject the non-aqueous electrolyte solution can be further shortened. An upper limit of the width of the inclined regions 35 is 2.0 mm, for example. By setting the width of the inclined regions 35 to less than or equal to 2.0 mm, the volume of the upper insulating plate 30Y can be secured, so that the strength of the upper insulating plate 30Y can be easily secured. Therefore, the width of the inclined regions 35 is preferably greater than or equal to 0.10 mm and less than or equal to 2.0 mm, and more preferably greater than or equal to 0.20 mm and less than or equal to 2.0 mm.

In the inclined regions 35, the angle of inclination of the upper surface of the upper insulating plate 30Y relative to the radial direction is, for example, greater than or equal to 5° and may be greater than or equal to 10°. By increasing the angle of inclination of the upper surface of the upper insulating plate 30Y relative to the radial direction, it is easier for the non-aqueous electrolyte solution present in the vicinity of the second through-holes 32 to enter the second through-holes 32 along the inclined regions 35. In addition, an upper limit of the angle of inclination of the upper surface of the upper insulating plate 30Y relative to the radial direction is 60°, for example. Therefore, the angle of inclination of the upper surface of the upper insulating plate 30Y relative to the radial direction is, for example, greater than or equal to 5° and less than or equal to 60° and may be greater than or equal to 10° and less than or equal to 60°.

In the example shown in FIGS. 6 and 7, the inclined regions 35 are provided only in the second through-holes 32, though the inclined regions 35 may also be provided in the first through-hole 31 in addition to the second through-holes 32.

The present disclosure is further described with the embodiment described below.

### Configuration 1:

A cylindrical battery, comprising: an electrode assembly having a positive electrode and a negative electrode wound with a separator interposed between the positive electrode and the negative electrode; a non-aqueous electrolyte solution; a bottomed cylindrical housing can that houses the electrode assembly and the non-aqueous electrolyte solution; a sealing assembly that seals an opening portion of the housing can; and an insulating plate arranged between the electrode assembly and the sealing assembly, the insulating plate having at least one of a through-hole and a notch, in which in a region facing the electrode assembly on a surface of the insulating plate on a side of the electrode assembly, a protrusion extending to the side of the electrode assembly is provided along an edge of at least one of the through-hole and the notch.

### Configuration 2:

The cylindrical battery according to Configuration 1, in which the protrusion is provided in a range of greater than or equal to 50% of an entire circumference of an edge of the adjacent through-hole or notch.

### Configuration 3:

The cylindrical battery according to Configuration 1 or 2, in which the protrusion is provided over the entire circumference of an edge of the adjacent through-hole or notch.

### Configuration 4:

The cylindrical battery according to any one of Configurations 1 to 3, in which a length of the protrusion in an axial direction of the housing can is greater than or equal to 0.10 mm and less than or equal to 1.0 mm.

### Configuration 5:

The cylindrical battery according to any one of Configurations 1 to 4, in which on a surface of the insulating plate on a side of the sealing assembly, an inclined region inclined to the side of the electrode assembly toward an edge of the through-hole or the notch is provided along the edge of at least one of the through-hole and the notch.

### REFERENCE SIGNS LIST

10 Cylindrical battery, 11 Positive electrode, 12 Negative electrode, 13 Separator, 14 Electrode assembly, 15 Housing can, 15a Opening portion, 15b Grooved portion, 16 Positive electrode lead, 17 Negative electrode lead, 18 Lower insulating plate, 18A Through-hole, 19 Hollow portion, 20 Sealing assembly, 21 Filter, 22 Lower vent member, 23 Insulating member, 24 Upper vent member, 25 Cap, 25a Vent hole, 30, 30X, 30Y Upper insulating plate (insulating plate), 31 First through-hole, 32 Second through-hole, 33 Protrusion, 34 Notch, 35 Inclined region

## Claims

1. A cylindrical battery, comprising:
an electrode assembly having a positive electrode and a negative electrode wound with a separator interposed between the positive electrode and the negative electrode;
a non-aqueous electrolyte solution,
a bottomed cylindrical housing can that houses the electrode assembly and the non-aqueous electrolyte solution,
a sealing assembly that seals an opening portion of the housing can; and
an insulating plate arranged between the electrode assembly and the sealing assembly, the insulating plate having at least one of a through-hole and a notch, wherein
in a region facing the electrode assembly on a surface of the insulating plate on a side of the electrode assembly, a protrusion extending to the side of the electrode assembly is provided along an edge of at least one of the through-hole and the notch.

2. The cylindrical battery according to claim 1, wherein the protrusion is provided in a range of greater than or equal to 50% of an entire circumference of an edge of the adjacent through-hole or notch.

3. The cylindrical battery according to claim 1, wherein the protrusion is provided over an entire circumference of an edge of the adjacent through-hole or notch.

4. The cylindrical battery according to claim 1, wherein a length of the protrusion in an axial direction of the housing can is greater than or equal to 0.10 mm and less than or equal to 1.0 mm.

5. The cylindrical battery according to claim 1, wherein on a surface of the insulating plate on a side of the sealing assembly, an inclined region inclined to the side of the electrode assembly toward an edge of the through-hole or the notch is provided along the edge of the through-hole or the notch.
